# EUROPEAN PATENT APPLICATION

(11) **EP 2 083 154 A1**
(43) Date of publication of application: **29.07.2009**
(21) Application number: 08150565.3
(22) Date of filing: 23.01.2008
(51) Int. Cl.: F02D 9/02

(54) **Air-inlet system for internal combustion engine, air-conditioning system and combustion engine comprising the air-inlet system**

(71) Applicant: TECHNISCHE UNIVERSITEIT EINDHOVEN, 5612 AZ Eindhoven (NL)
(72) Inventor: Boot, Michael, 5612 NR Eindhoven (NL); Gielen, Paul, 5651 CN Eindhoven (NL)
(74) Representative: DeltaPatents B.V.

(57) **Abstract**

The invention relates to an air-inlet system (10), and relates to an air-conditioning system (100) and an internal combustion engine (200) comprising the air-inlet system. The air-inlet system comprises an air intake port (20), an air output port (30) and a turbine (40) for controlling air mass flow into a combustion chamber (202) of an internal combustion engine. The turbine is provided with a propeller hub (42) which comprises at least one blade (44). The propeller hub is arranged between the air intake port and the air output port for propelling the blade of the turbine. The turbine has an air-flow resistance for determining the air mass flow into the combustion chamber.

The effect of the air-inlet system according to the invention is that the use of a turbine enables to use at least some of the pressure drop across the turbine to drive the blade of the turbine for generating rotational energy.

## Description

### FIELD OF THE INVENTION:

The invention relates to an air-inlet system for an internal combustion engine.

The invention further relates to an air-conditioning system comprising the air-inlet system, to a combustion engine comprising the air-inlet system and to a vehicle comprising the air-inlet system.

### BACKGROUND OF THE INVENTION:

Known internal combustion engines regulate the engine power by regulating the allowed air mass flow into the cylinders of the engine. Especially in spark-ignition engines where the fuel-to-air mass ratio should be substantially constant the regulation of the engine power is done by regulating the air mass flow into the cylinders. In practice, the fuel-to-air mass ratio should be substantially fixed at approximately 14.7:1 which is a prerequisite of proper functioning of the installed three-way catalyst. Because the volume of air which flows into a cylinder per stroke is constant - depending on the volume of the cylinder - the mass flow of the air is generally varied by varying the air intake pressure near the cylinder of the combustion engine. In the known spark-ignition engines the intake pressure is varied using a valve between an air inlet of the cylinder and ambient air. Due to the pressure difference across the valve, the air expands after passing the valve. This expansion process of the air is isenthalpic in nature which means that the air temperature remains substantially constant over the valve. A frictional heating of the air when flowing through the valve compensates a drop in temperature which would have been expected due to the expanding of the air.

A drawback of the use of the known valve for determining the air mass flow into the cylinders of the internal combustion engine is that it represents a substantial loss of energy.

### SUMMARY OF THE INVENTION:

It is an object of the invention to provide an air-inlet system for an internal combustion engine having an improved efficiency.

According to a first aspect of the invention the object is achieved with an air-inlet system for controlling air mass flow into a combustion chamber of an internal combustion engine, the air-inlet system comprising an air intake port, an air output port and a turbine provided with a propeller hub comprising at least one blade, the propeller hub being arranged between the air intake port and the air output port for propelling the blade of the turbine, the turbine having an air-flow resistance for determining the air mass flow into the combustion chamber.

The effect of the air-inlet system according to the invention is that the use of a turbine enables to control the air mass flow into the combustion chamber of the internal combustion engine while enabling to use at least some of the pressure drop across the turbine to drive the blade of the turbine for generating rotational energy of the blade of the turbine. This rotational energy may be used for different purposes. For example, when the air-inlet system is used together with an internal combustion engine of a vehicle, the rotational energy of the blade of the turbine may, for example, be used to propel one or more engine appendages, for example, a power steering pump or, for example, an alternator for converting the rotational energy into electric energy. In known vehicles these engine appendages are typically driven by the crank shaft of the engine and thus consume power from the combustion engine. By using the air-inlet system according to the invention the engine appendages may be removed from the crank shaft reducing the power of the combustion engine, while the rotational energy of the turbine is used to propel the engine appendages.

In the known internal combustion engines a valve is used to determine the air-mass flow into the cylinder of the engine. The air-expansion process is isenthalpic in which the cooling of the air which would have occurred due to the expansion process is compensated by frictional heating of the air. This frictional heating of the air in the known internal combustion engine generates a substantial loss of energy. By using a turbine to control the air mass flow into the combustion chamber of the internal combustion engine, the rotation of the blade due to the passing air flow recovers energy which may relatively easily be used.

A further benefit of the air-inlet system according to the invention is that isenthalpic expansion of the air is prevented such that the air, after passing through the turbine, is cooled. The turbine extracts heat from the air-flow through the turbine to rotate the blade of the turbine. As a consequence, the air leaving the turbine has a reduced temperature compared to the air entering the turbine. When providing this cooled air to the combustion chamber of the internal combustion engine the combustion temperature drops which reduces the emission of nitrogen oxides of the internal combustion engine. Furthermore, the use of cooled air into the combustion chamber reduces the thermal loading of the combustion engine and reduces the risk of engine knocking which causes mechanical wear of the combustion engine.

A further benefit of the air-inlet system according to the invention is that the controlling of the air mass flow into the combustion chamber of the internal combustion engine may be used for regenerative braking. This regenerative braking reduces the speed of the vehicle by reducing the air mass flow into the combustion chamber. This reduction of the air mass flow increases a pressure difference between the air input port and the air output port of the air-inlet system which causes the blades of the turbine to rotate. This rotational energy which is generated by the regenerative braking may be used to propel further engine appendages or may be used to be converted into a different energy, for example, electrical energy stored in a battery. This regenerative braking may be applied both in spark ignition engines and in compression ignition engines.

In an embodiment of the air-inlet system, the turbine comprises a means for controlling the air-flow resistance of the turbine. A benefit of this embodiment is that by varying the air-flow resistance of the turbine, the engine power may be regulated.

In an embodiment of the air-inlet system, the means comprises an adjustable vane for controlling the air-flow resistance of the turbine by varying the air mass flow against the blade of the turbine. Such a turbine is also known as variable nozzle turbine. In a variable nozzle turbine, the turbine comprises at least one adjustable vane which directs the air flow onto the blade of the turbine. When the vane is rotated such that the air flow is substantially perpendicular to the blade of the turbine, the force of the air onto the blade is high causing the blade of the turbine to rotate relatively fast. In such a configuration the air-flow resistance would be relatively high reducing the overall power of the internal combustion engine. When the vane is rotated such that the air flow is at an angle with respect to the blade, the force of the air onto the blade is reduced causing the blade of the turbine to rotate less fast, reducing the rotational power. In this second configuration of the adjustable vane, the air-flow resistance would be relatively low increasing the overall power of the internal combustion engine.

In an embodiment of the air-inlet system, the means is arranged for controlling a rotational speed of the blade of the turbine for controlling the air-flow resistance. Preferably the means for controlling the rotational speed determines an amount of rotational energy extracted from the turbine to reduce the rotational speed, for example, to drive a hydrodynamic pump for generating increased hydraulic pressure which may be used to propel, for example, a power steering pump or a brake enhancement system. Alternatively, the rotational energy may be extracted via other energy storage systems, for example, a flywheel which stores an excess of rotational energy for later use.

In an embodiment of the air-inlet system, the means is an alternator being propelled by the turbine for controlling the rotational speed of the blade, the alternator being configured for converting a rotational energy of the blade into electrical energy and being configured for controlling the rotational speed of the blade by controlling a quantity of electric power generated by the alternator. A benefit of this embodiment is that the electric energy generated by the alternator may be stored in a battery or may be used by electronic systems of, for example, a vehicle which comprises the air-inlet system.

In an embodiment of the air-inlet system, the air-inlet system comprises a heat exchanger arranged between the turbine and the air output port for exchanging thermal energy with the air mass flow from the turbine. A benefit of this embodiment is that the heat exchanger may be used to cool a further fluid using the cooled air flowing out of the turbine. This further fluid may, for example, be a second flow of air. When the air-inlet system is used, for example, in a vehicle, the second flow of cooled air may be used to cool the interior of a vehicle.

In an embodiment of the air-inlet system, the heat exchanger comprises a cold-storage unit. The cold-storage unit may comprise a mass or a liquid which is cooled by the cooled air flowing out of the turbine. A benefit of this embodiment is that the cold-storage unit enables a temporary increase in engine power of the combustion engine according to the invention. At full-load conditions, the pressure drop over the turbine is substantially zero. With no expansion present, the air flowing through the turbine will no longer be cooled. The cold-storage unit may be used as an intercooler to cool the air flowing into the combustion chamber of the internal combustion engine. Due to the cooling of the air which flows into the combustion chamber, the density of the air is higher resulting in more air which fits in the combustion chamber. As the air-to-fuel ratio should remain substantially constant, the increased air density due to the cooling enables more fuel to be injected into the engine and enables a higher maximum torque of the internal combustion engine. So by using the cold-storage unit as an intercooler a temporary increase in the maximum torque of the internal combustion engine may be achieved.

In an embodiment of the air-inlet system, a mass of the heat exchanger constitutes the cold-storage unit. A benefit of this embodiment is that no additional cold-storage unit is required for providing the intercooler functionality. When, for example, the heat exchanger is made of copper and has a mass of about 5 kilograms, the internal combustion engine can extract cooled air from the heat exchanger during approximately 90 seconds of maximum torque which typically is enough to provide additional energy boost, for example, when accelerating.

In an embodiment of the air-inlet system, the air-inlet system further comprises a controller for regulating an air temperature of the air mass flow into a combustion chamber. Because air of reduced temperature is available for flowing into the combustion chamber, the efficiency of the internal combustion engine may be improved by regulating the temperature. In the known combustion engines, both spark ignition engines and compression ignition engines, the efficiency is often not optimal to ensure that, for example, nitrogen oxide emission regulations are met by the engine. For example, the ignition timing and/or compression ratios are chosen such that the nitrogen oxide emission remains within a predetermined range. However, this causes loss of efficiency. When providing cooled air to the combustion chamber of the internal combustion engine the combustion temperature drops which reduces the emission of nitrogen oxides of the internal combustion engine. Using this effect, the use of cooled air enables the ignition timing and/or compression ratios to be adapted to increase the efficiency of the internal combustion engine. Furthermore, the regulation of the air temperature by the controller may enable the controller to, for example, continuously tune the ignition timing and/or compression ratios such that the efficiency of the internal combustion engine remains substantially optimal. A further benefit when controlling the temperature of the air flowing into the combustion chamber is that the thermal loading of the combustion engine may be reduced or may be controlled to remain within a predetermined level. When, for example, the air flowing into the combustion chamber comprises cooled air, the thermal loading of the engine may be lower than a typical thermal loading of that engine. This difference between the thermal loading due to cooled air and the typical thermal loading of the engine may be used to, for example, increase the efficiency of the engine which results in an increase of the thermal loading. Such efficiency increasing measures, for example, may be increasing the compression ratio or altering the ignition timing. These efficiency increasing measures may only restrictively be applied in the known internal combustion engines as these measures would result in a thermal loading substantially above the typical thermal loading causing considerable wear on the known internal combustion engine. The controller may, for example, be part of an on-board vehicle computer or may be a separate controller. The controller may receive a sense signal indicating the temperature of the air mass flow and may receive further sense signals from, for example, on-board vehicle diagnostics such as a knock-sensor, cylinder pressure sensor and/or other diagnostics.

In an embodiment of the air-inlet system, the controller regulates the air temperature of the air mass flow via the turbine and/or via the heat exchanger. By altering the air-flow resistance of the turbine, the temperature of the air flowing from the turbine into the combustion chamber may be adapted. Furthermore, when the air-inlet system comprises a heat exchanger, for example, comprising a cold-storage unit, the controller may further use the heat exchanger to regulate the air temperature of the air mass flow.

In an embodiment of the air-inlet system, the air-inlet system further comprises a valve arranged between the air intake port and the air output port in series with the turbine, the valve being configured for further increasing the air-flow resistance for determining the air mass flow into the combustion chamber. A benefit of this embodiment is that the valve in series with the turbine may be used to increase the air-flow beyond the range over which the turbine alone can alter the air-flow resistance. A turbine only has a limited range over which the air-flow resistance may be altered. This range may not be sufficient for use in an internal combustion engine. By adding the valve in series with the turbine, the range over which the air-inlet system may alter the air-flow resistance is increased while the turbine still uses at least some of the pressure drop across the air-inlet system to drive the blade of the turbine for generating rotational energy of the blade of the turbine. As such, the required (increased) range of the air-flow resistance is generated while still some of the energy is reused.

In an embodiment of the air-inlet system, the air intake port is connected to a compressor, the compressor generating pressurized air and providing pressurized air to the air intake port. The compressor may, for example, be a compressor propelled by a crankshaft of the internal combustion engine. Alternatively, the compressor may be an exhaust turbo which extracts residual energy from the exhaust of the internal combustion engine for generating, for example, compressed air to the air-inlet system. In such a system, an excess of turbo pressure which often is released into the air (e.g. via a dump valve, a waste gate or a blow-off valve), may now be reused via providing the pressurized air to the air-intake port of the air-inlet system. This additional pressurized air is converted into additional rotational energy of the blades of the turbine, rather than to waste the excess of pressurized air by releasing it.

According to a second aspect of the invention the object is achieved with an air-conditioning system as claimed in claim 13. According to a third aspect of the invention, the object is achieved with an internal combustion engine as claimed in claim 14. According to a fourth aspect of the invention, the object is achieved with a vehicle as claimed in claim 15.

### BRIEF DESCRIPTION OF THE DRAWINGS:

These and other aspects of the invention are apparent from and will be elucidated with reference to the embodiments described hereinafter.

In the drawings:
Fig. 1 shows a schematic representation of a spark-ignition engine comprising the air-inlet system according to the invention,
Fig. 2 shows a schematic representation of an air-conditioning system comprising the air-inlet system according to the invention,
Figs. 3A and 3B show a schematic representation of variable nozzle turbine having adjustable vanes, and
Fig. 4 shows a schematic representation of a vehicle.

The figures are purely diagrammatic and not drawn to scale. Particularly for clarity, some dimensions are exaggerated strongly. Similar components in the figures are denoted by the same reference numerals as much as possible.

### DETAILED DESCRIPTION OF THE EMBODIMENTS:

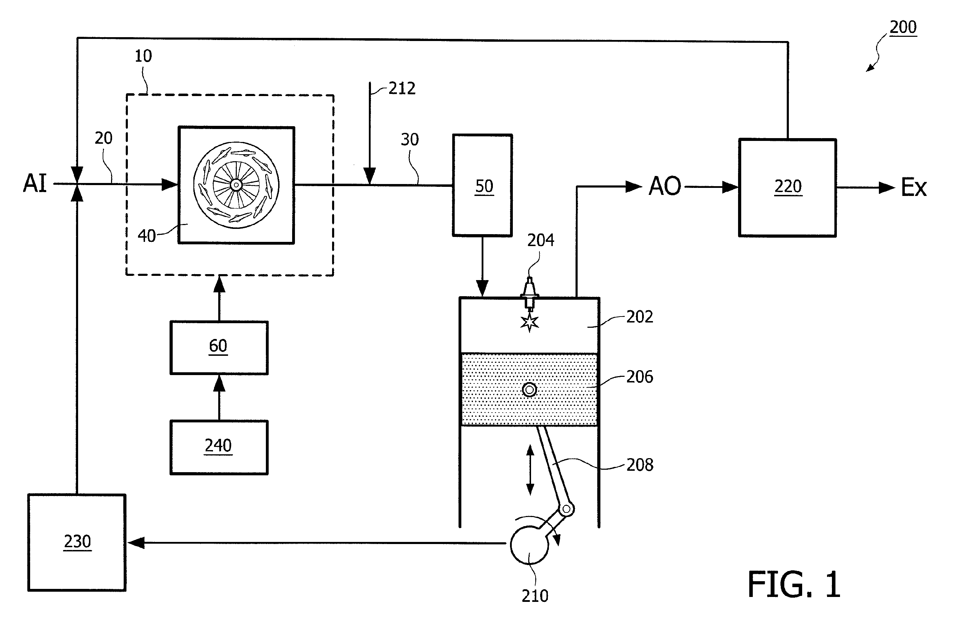

Fig. 1 shows a schematic representation of a spark-ignition engine 200 comprising the air-inlet system 10 according to the invention. The spark-ignition engine 200 comprises a combustion chamber 202 which comprises a piston 206 connected to a crankshaft 210 via a piston rod 208. The spark-ignition engine 200 further comprises a spark plug 204 for providing a spark for igniting the air-fuel mixture and apply a force on the piston 206 which moves away from the spark-plug 204. The movement of the piston 206 is converted via the piston rod 208 into a rotational movement of the crankshaft 210.

Known spark-ignition engines typically comprise a three-way catalyst (not shown) for reducing the emission of carbon monoxide and nitrogen monoxide from the spark-ignition engine. This catalyst requires a substantially constant air-fuel ratio of approximately 14.7:1 for proper operation. The engine power in the known spark-ignition engines is typically regulated by regulating the air mass flow into the combustion chamber of the engine. The air mass flow is generally varied by varying the air intake pressure near the cylinder of the known combustion engine using a valve between an air inlet of the combustion chamber and ambient air. Due to the pressure difference across the valve, the air expands after passing the valve. However, in the known spark-ignition engines the expansion process of the air coincides with frictional heating of the expanding air which results in a substantially isenthalpic process in which the reduction of the air temperature due to the expansion is annulled by the heating of the air due to friction. This results in energy being wasted.

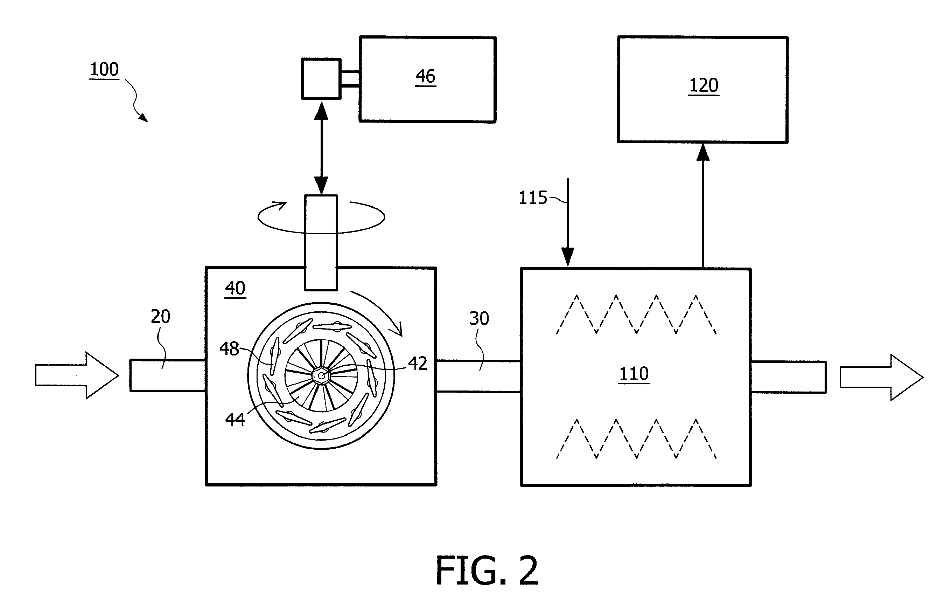

In the spark-ignition engine 200 as shown in Fig. 1, the spark-ignition engine 200 comprises an air-inlet system 10 for controlling the air mass flow into the combustion chamber 202. The air-inlet system 10 comprises a turbine 40 provided with a propeller hub 42 (see Fig. 2) which comprises at least one blade 44 (see Fig. 2). The air-inlet system 10 comprises an air intake port 20 through which the air enters the air-inlet system 10, and comprises an air output port 30 via which the air is provided to the combustion chamber 202 of the spark-ignition engine 200. The air-inlet system 10 is configured to guide air from the air intake port 20 via the turbine 40 to the air output port 30. Between the air output port 30 and the combustion chamber 202 a manifold 50 and fuel inlet means 212 may be provided. The turbine 40 enables to control the air mass flow into the combustion chamber 202 while using at least some of the pressure drop across the turbine 40 to drive the blade 44 of the turbine 40 for generating rotational energy. The rotational energy of the blade 44 of the turbine 40 may, for example, be used to propel one or more engine appendages, for example, a power steering pump (not shown) or, for example, an alternator 46 (see Fig. 2) for converting the rotational energy into electric energy.

So, due to the replacement of the valve in the known spark-ignition engines by the turbine 40 in the spark-ignition engine 200 according to the invention, the energy of the expanding air, which is wasted in the known spark-ignition engines, may be partially converted into rotational energy of the blade 44 and reused.

The use of the turbine 40 further prevents the isenthalpic expansion of the air. As a result, the air, after passing through the turbine 40, is cooled. The turbine 40 extracts heat from the air-flow through the turbine 40 to rotate the blade 44 of the turbine 40. Having cooled air flowing into the combustion chamber 202 has several advantages. First, the combustion temperature is reduced which reduces the emission of nitrogen oxides. Second, the cooled air reduces the thermal loading of the spark-ignition engine 200 and reduces the risk of engine knocking. And third, the cooled air has increased density and so this increased density enables more fuel to be injected while maintaining a substantially constant air-to fuel ratio, generating a higher torque of the spark-ignition engine 200.

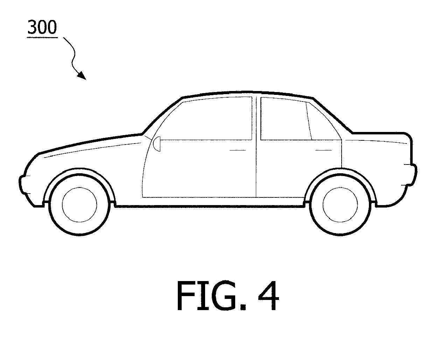

Furthermore, the cooled air from the turbine 40 may also be guided through a heat exchanger 110 (see Fig. 2) which may be used to cool a second flow of fluid being, for example, a flow of air into the cabin of a car 300 (see Fig. 4). The rotational energy of the blade 44 of the turbine 40 may be used to propel the second flow of the fluid. So the combination of the air-inlet system 10 according to the invention with a heat exchanger 110 may be used as an air-conditioning system 100 and may, for example, replace conventional air-conditioning systems in vehicles which are typically propelled via the crankshaft 210 of the engine. Such an air-conditioning system 100 according to the invention would not consume engine-power, but would reuse wasted energy which in the known spark-ignition engines is wasted in the valve due to the frictional heating resulting in the isenthalpic expansion, for cooling the air-flow into the vehicle and for propelling the air-flow into the vehicle.

The air-inlet system 10 according to the invention further comprises a controller 60 for regulating the air temperature of the air mass flow into a combustion chamber 202. In the known combustion engines, both spark ignition engines and compression ignition engines, the efficiency is often not optimal to ensure that, for example, nitrogen oxide emission regulations are met by the engine. For example, the ignition timing and/or compression ratios are chosen such that the nitrogen oxide emission remains within a predetermined range. However, this typically causes loss of efficiency. When providing cooled air to the combustion chamber 202 of the internal combustion engine 200 the combustion temperature drops which reduces the emission of nitrogen oxides of the internal combustion engine. Using this effect, the use of cooled air enables the ignition timing and/or compression ratios to be adapted to increase the efficiency of the internal combustion engine. Furthermore, the controller 60 may, for example, regulate the air temperature which enables the controller 60 to, for example, continuously tune the ignition timing and/or compression ratios such that the efficiency of the internal combustion engine 200 remains substantially optimal. When increasing the compression ratio or altering the ignition timing the thermal loading of the internal combustion engine 200 may increase. The controller 60 may, for example, regulate the air temperature such that the thermal loading of the internal combustion engine 200 remains within a predetermined level while, for example, increasing the compression ratio or altering the ignition timing. The controller 60 may, for example, be part of an on-board vehicle computer (not shown) or may be a separate controller 60. The controller may receive a sense signal (not shown) indicating the temperature of the air mass flow and may receive further sense signals from, for example, on-board vehicle diagnostics 240 such as a knock-sensor (not shown), cylinder pressure sensor (not shown) and/or other diagnostics. The air temperature of the air mass flow may be regulated via the turbine and/or via the heat exchanger.

The air-flow entering the air-inlet system 10 is indicated with Al and the exhaust-air flowing from the combustion chamber 202 is indicated with AO.

The spark-ignition engine 200 as shown in Fig. 1 further comprises two embodiments of a compressor 220, 230 for generating pressurized air and for providing at least part of the pressurized air to the air intake port 20 of the air-inlet system 10. In a first embodiment, the compressor 230 is propelled by the crankshaft 210 of the spark-ignition engine 200. Alternatively, the compressor 220 may be an exhaust turbo 220 which extracts residual energy from the exhaust-air AO flowing from the combustion chamber 202 and converts the residual energy into rotational energy which may be used to generate compressed air. This compressed air generated by the exhaust turbo 220 may be provided to the Al intake port 20 of the air-inlet system 10 according to the invention. In such a system, an excess of exhaust-turbo pressure, which in the known spark-ignition engines often is released into the air, may now be reused via providing the pressurized air to the air-intake port 20 of the air-inlet system 10. This additional pressurized air is converted into additional rotational energy of the blades 44 of the turbine 40. The air-flow flowing from the exhaust-turbo 220 is indicated in Fig. 1 with Ex. The excess of pressure is often released into the air via, for example, a dump valve (not shown), a waste gate (not shown) or a blow-off valve (not shown).

Alternatively the air-inlet system 10 may be connected to a compression ignition engine (not shown), for example, to produce regenerative braking or, for example, to use an excess of turbo-power to drive the turbine 40. The air-inlet system 10 connected to the compression ignition engine may further comprise the heat-exchanger 110 and may function as an air-conditioning system 100 which, for example, uses excess turbo-power to drive the air-conditioning system 100.

Fig. 2 shows a schematic representation of the air-conditioning system 100 comprising the air-inlet system 10 according to the invention. The air intake port 20 comprises ambient air or compressed air. The air-inlet system 10 comprises the air intake port 20 through which the air enters the air-inlet system 10, and comprises the air output port 30 via which the air is provided to the combustion chamber 202 of the internal combustion engine 200. The internal combustion engine 200 generates a pressure difference across the air-inlet system 10. Due to the use of the turbine 40 for determining the air-flow resistance of the air-inlet system 10, the air flowing out of the air output port 30 is cooled. This cooled air flows through the heat-exchanger 110 of the air-conditioning system 100 shown in Fig. 2. The heat-exchanger 110 may use the cooled air to reduce the temperature of a further fluid flow, for example, entering via a fluid inlet 115 into the heat-changer 110. This further fluid flow may be connected to a cold-storage unit 120 for storing part of the cooled fluid for use at a later time. This cold-storage unit 120 may, for example, be used to reduce the temperature of the air flowing into the combustion chamber 202 of the internal combustion engine 200 and may be used as an intercooler. Alternatively, the cold-storage unit 120 may be used to cool an air-flow into the cabin of the vehicle, for example, when the cooled air which flows out of the air-inlet system 10 is required to provide additional torque to the internal combustion engine 200 - as explained previously.

Alternatively, the heat-exchanger 110 comprises a predefined mass (not shown) which is used as cold-storage unit 110. When, for example, the heat exchanger 110 is made of copper and has a mass of about 5 kilograms, the internal combustion engine 200 can extract cooled air from the heat exchanger 110 during approximately 90 seconds of maximum torque which typically is enough to provide additional energy boost, for example, when accelerating to a higher speed or when driving away from a traffic light.

In the embodiment of the air-conditioning system 100 as shown in Fig. 2 the rotational energy of the turbine 40 is used to propel an alternator 46 which converts the rotational energy into electrical energy. This generated electrical energy may be stored or may be used for other appliances (not shown).

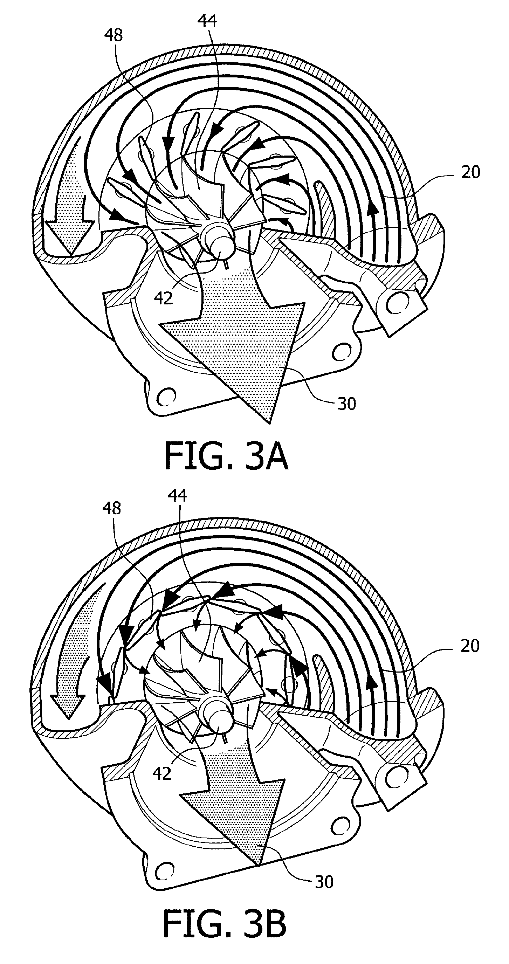

Fig. 2 further comprises an enlarged part of the turbine 40 which is a schematic representation of a variable nozzle turbine 40. In this detailed schematic representation the propeller hub 42 comprising the propeller blades 44 which are propelled by the passing air are visible. Furthermore, the variable nozzle turbine 40 comprises adjustable vanes 48. These adjustable vanes 48 regulate the air-flow through the variable nozzle turbine 40 and determine the air-flow resistance of the variable nozzle turbine 40. How the adjustable vanes 48 vary the air-flow resistance is shown in Fig. 3A and 3B.

Alternatively, the air-flow resistance of the turbine 40 may be varied by varying the load which is propelled using the rotational energy of the blades 44. For example, the alternator 46 may be the load which extracts rotational energy from the turbine 40 and converts the rotational energy into electrical energy. The load of the turbine 40 represented by the alternator 46 may be varied by varying the electrical energy which is produced by the alternator 46. Increasing the electrical energy extracted from the alternator 46 increases the load on the turbine 40 which reduces the rotational speed of the blades 44 of the turbine 40 which increases the air-flow resistance of the air-inlet system 10 according to the invention.

Figs. 3A and 3B show a schematic representation of variable nozzle turbine 40 having adjustable vanes 48. These adjustable vanes 48 may be used to alter the air-flow resistance of the variable nozzle turbine 40.

Fig. 3A shows a first orientation of the adjustable vanes 48 in which the adjustable vanes 48 are adjusted such that the air can flow through the turbine 40 relatively easily resulting in a relatively low air-flow resistance of the turbine 40. Fig. 3A shows the air intake port 20, the air output port 30, the propeller hub 42, the blades 44 and the adjustable vanes 48. This first orientation of the adjustable vanes 48 generally represent high engine loads and/or speed. The vanes 48 as shown in the first orientation of the adjustable vanes 48 guide the air flow such that the air strikes the blades 44 at a relatively large angle away from a normal axis (not shown) of the blades 44 which results in relatively low force applied to the blades 44 allowing the air to flow through the turbine 40 relatively easily resulting in a relatively low air-flow resistance. This relatively low air-flow resistance reduces the cooling of the air which flows through the air-inlet system 10. So to provide additional torque to the internal combustion engine 200, the cold-storage unit 120, 110 may be used as an intercooler to cool the air before entering the combustion chamber 202.

Fig. 3B shows a second orientation of the adjustable vanes 48 in which the adjustable vanes 48 are adjusted such that the air is guided to strike the blades 44 at an angle relatively near to the normal axis (not shown) of the blades 44 which results in a relatively large force applied to the blades 44 for propelling the blades 44. This second orientation of the adjustable vanes 48 generates a relatively high air-flow resistance of the turbine 40 which causes the air to expand in the turbine 40 reducing the temperature of the air in the air-flow. This cooled air may be used to increase the torque of the internal combustion engine 200 due to the increased density of the air, or which may be used in an air-conditioning system 100 which, for example, uses a heat exchanger to cool a further fluid which may subsequently be used in the air-conditioning system 100.

Fig. 4 shows a schematic representation of a vehicle 300. The vehicle 300, for example, comprises the air-conditioning system 100 according to the invention and/or comprises the internal combustion engine 200 according to the invention. The vehicle 300 may, for example, be a car 300 as schematically shown in Fig. 4. Alternatively the vehicle 300 may be any other vehicle 300 having the internal combustion engine 200 and/or having the air-conditioning system 100 according to the invention.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. An air-inlet system (10) for controlling an air mass flow into a combustion chamber (202) of an internal combustion engine (200), the air-inlet system (10) comprising an air intake port (20), an air output port (30) and a turbine (40) provided with a propeller hub (42) comprising at least one blade (44), the propeller hub (42) being arranged between the air intake port (20) and the air output port (30) for propelling the blade (44) of the turbine (40), the turbine (40) having an air-flow resistance for determining the air mass flow into the combustion chamber (202).

2. Air-inlet system (10) as claimed in claim 1, wherein the turbine (40) comprises a means (46 ,48) for controlling the air-flow resistance of the turbine (40).

3. Air-inlet system (10) as claimed in claim 2, wherein the means (48) comprises an adjustable vane (48) for controlling the air-flow resistance of the turbine (40) by varying the air mass flow against the blade (44) of the turbine (40).

4. Air-inlet system (10) as claimed in claim 2, wherein the means (46) is arranged for controlling a rotational speed of the blade (44) of the turbine (40) for controlling the air-flow resistance.

5. Air-inlet system (10) as claimed in claim 4, wherein the means (46) is an alternator (46) being propelled by the turbine (40) for controlling the rotational speed of the blade (44), the alternator (46) being configured for converting a rotational energy of the blade (44) into electrical energy and being configured for controlling the rotational speed of the blade (44) by controlling a quantity of electric power generated by the alternator (46).

6. Air-inlet system (10) as claimed in any one of the previous claims, wherein the air-inlet system (10) comprises a heat exchanger (110) arranged between the turbine (40) and the air output port (30) for exchanging thermal energy with the air mass flow from the turbine (40).

7. Air-inlet system (10) as claimed in claim 6, wherein the heat exchanger (110) comprises a cold-storage unit (110, 120).

8. Air-inlet system (10) as claimed in claim 7, wherein a mass of the heat exchanger (110) constitutes the cold-storage unit (110).

9. Air-inlet system (10) as claimed in any one of the previous claims, wherein the air-inlet system (10) further comprises a controller (60) for regulating an air temperature of the air mass flow into a combustion chamber (202).

10. Air-inlet system (10) as claimed in claim 9, wherein the controller (60) regulates the air temperature of the air mass flow via the turbine (40) and/or via the heat exchanger (110).

11. Air-inlet system (10) as claimed in any one of the previous claims, wherein the air-inlet system (10) further comprises a valve arranged between the air intake port (20) and the air output port (30) in series with the turbine (40), the valve being configured for further increasing the air-flow resistance for determining the air mass flow into the combustion chamber (202).

12. Air-inlet system (10) as claimed in any one of the previous claims, wherein the air intake port (20) is connected to a compressor (220, 230), the compressor (220, 230) generating pressurized air and providing pressurized air to the air intake port (20).

13. An air-conditioning system (100) comprising the air-inlet system (10) as claimed in any one of the claims 1 to 12.

14. internal combustion engine (200) comprising the air-inlet system (10) as claimed in claim 1 to 12.

15. Vehicle (300) comprising the air-inlet system (10) as claimed in any one of the claims 1 to 12, or comprising the air-conditioning system (100) as claimed in claim 13, or comprising the internal combustion engine (200) as claimed in claim 14.
